# EUROPEAN PATENT SPECIFICATION

(11) **EP 1 794 761 B1**
(45) Date of publication and mention of the grant of the patent: **27.02.2013**
(21) Application number: 05790258.7
(22) Date of filing: 08.09.2005
(51) Int. Cl.: G21F 5/10

(54) **NUCLEAR FUEL STORAGE UNIT**
LAGERBEHÄLTER FÜR KERNBRENNSTOFF
CONTENEUR DE STOCKAGE POUR COMBUSTIBLE NUCLEAIRE

(30) Priority: 15.09.2004 ZA 200407408
(43) Date of publication of application: 13.06.2007
(73) Proprietor: Pebble Bed Modular Reactor (Proprietary) Limited, 0046 Centurion (ZA)
(72) Inventor: FULS, Wilhelm Franz, WeaVind Park, 0184 Pretoria (ZA)
(74) Representative: Price, Nigel John King
(86) International application number: PCT/IB2005/052934
(87) International publication number: WO 2006/030350

(56) References cited:
- WO-A-00/04558
- DE-A1- 3 207 312
- FR-A- 2 721 430
- GB-A- 1 422 018
- US-A- 3 111 586
- US-A- 4 521 372
- US-A- 4 634 875
- US-A- 4 863 674
- PATENT ABSTRACTS OF JAPAN vol. 1998, no. 11, 30 September 1998 (1998-09-30) & JP 10 177089 A (ISHIKAWAJIMA HARIMA HEAVY IND CO LTD), 30 June 1998 (1998-06-30)
- PATENT ABSTRACTS OF JAPAN vol. 1998, no. 11, 30 September 1998 (1998-09-30) & JP 10 153695 A (ISHIKAWAJIMA HARIMA HEAVY IND CO LTD), 9 June 1998 (1998-06-09)
- PATENT ABSTRACTS OF JAPAN vol. 2003, no. 11, 5 November 2003 (2003-11-05) & JP 2003 207593 A (MITSUBISHI HEAVY IND LTD), 25 July 2003 (2003-07-25)

## Description

THIS INVENTION relates to the storage of nuclear fuel. More particularly it relates to a nuclear fuel storage unit.

When storing nuclear fuel, particularly before final disposal thereof, it is imperative that the fuel is stored in a manner which ensures that the stored fuel remains sub-critical, that decay heat is removed, that containment of radioactive material is maintained and that there is sufficient radiation protection of people and the environment.

The Inventor is aware that currently dry storage of spent nuclear fuel includes storing the fuel in movable containers which are sufficiently small to ensure that the volume or mass of fuel contained therein is too small to become critical. Further, a number of these relatively small containers may be contained within a vault and the container spacing is selected to ensure sub-criticality.

Heat removal is performed by active cooling systems within the vault. The containers may also be cooled by passive means. In which case the container is made from very thick material to perform the radiation shielding.

This arrangement is expensive, *inter alia* because of the cost associated with the large number of the containers as well as the complex handling equipment required.

Naturally, however, in the interest of minimizing costs, it is desirable that each storage container contains as much fuel as possible thereby minimizing the number of storage containers required.

GB 1 422 018 discloses a shielded container for radioactive substances, having a central shroud for the fuel elements or the like, an antigamma ray lead core and a heat exchanger disposed in a convection chamber.

US 3,111,586 discloses an air-cooled container for nuclear fuel elements.

Other prior art storage facilities include, in a vessel, a plurality of spaced apart discrete storage volumes or compartments within which fuel is receivable. Although the total mass of fuel stored in the vessel may be sufficient to achieve criticality, the mass of fuel in each compartment is too small to achieve criticality. In addition, shielding is provided between the compartments by the material of the vessel to ensure sub-criticality.

These vessels are expensive to manufacture. In addition, complicated and expensive loading equipment is required in order to load the fuel to be stored in the discrete compartments. After the compartments have been loaded, they need to be sealed to avoid radiation streaming.

It is an object of this invention to provide means which the Inventor believes will at least alleviate these problems.

According to the invention there is provided a nuclear fuel storage unit as specified in the claims.

Hence, even though the mass of fuel received in the fuel receiving cavity may be substantially greater than that required to achieve critical mass, the configuration of the fuel receiving cavity ensures sub-criticality of the fuel thereby permitting a relatively large mass of fuel to be stored in a relatively small volume.

The Inventor believes that the invention will be particularly, although not exclusively, suitable for use with spherical fuel elements. By making use of a storage unit having a single fuel receiving cavity of large volume, the cavity can be loaded with a large volume of fuel without the need for expensive or complicated fuel loading equipment. Further, the provision of the internal coolant flow path permits coolant to flow through the vessel thereby improving the removal of decay heat.

The storage unit includes a cooling system which has a primary mode of operation in which it functions as a closed loop active cooling system and a secondary mode of operation in which it functions as an open loop passive cooling system.

When in its primary mode of operation, the cooling system may make use of treated air, e.g. air with a low relative humidity, typically less than 10%, as a coolant. This has the advantage that the risk of corrosion is reduced permitting the components of the storage unit and in particular the vessel to be formed of relatively inexpensive materials with a resultant cost saving.

The vessel may include a top and a bottom connected together by a sidewall, the at least one tubular member extending between and opening out of the top and the bottom.

Preferably, the storage unit includes a plurality of spaced apart tubular members extending between and opening out of the top and bottom of the vessel.

The dimensions of the vessel and the dimensions, number and arrangement of the tubular members will be selected taking into account any burn-up credit of the fuel to be stored to ensure that the packing density and geometry of the stored fuel in the fuel receiving cavity is such that the fuel remains sub-critical and that adequate heat removal is achieved.

The nuclear fuel storage unit may include a hollow housing within which the vessel is contained, the housing having a top, a bottom and a side wall extending therebetween. A divider may be provided in the housing to divide the housing into an outer part and an inner part within which the vessel is located, the outer and inner parts being connected in flow communication.

The cooling system may include a cooling and conditioning unit having an inlet which is connected in flow communication with the inner part of the housing for receiving hot coolant therefrom and an outlet which is in flow communication with the outer part of the housing to feed cooled and conditioned coolant thereto.

The cooling and conditioning unit may include at least one heat exchanger, typically an air/coolant heat exchanger for cooling the coolant from the housing.

In a preferred embodiment of the invention, the divider extends downwardly from the top of housing to a position clear of the bottom of the housing so that the lower ends of the outer and inner parts of the housing are connected in flow communication around the lower edge of the divider. The divider may be spaced outwardly from an outer surface of the vessel and inwardly from an inner surface of the side wall of the housing such that a coolant flow path is defined between the housing and the divider and between the divider and the outer surface of the vessel.

The inlet of the cooling and conditioning unit may be connected to a housing outlet which leads from the inner part of the housing through the top of the housing and the outlet of the cooling and conditioning unit may be connected to a housing inlet which extends through the top of the housing into the outer part of the housing.

The cooling system may include a vent arrangement which, in the primary mode of operation, i.e. when the cooling and conditioning unit is fully functional, is closed and, in the secondary or passive mode of operation of the cooling system, is open, thereby connecting the interior of the housing in flow communication with atmosphere. In a preferred embodiment of the invention, the vent arrangement includes at least one inlet vent leading into the outer part of the housing and at least one outlet vent leading from the top of the inner part of the housing. Hence, in use, when the cooling system is in its passive mode, air contained within the inner part of the housing is heated as a result of decay heat generated by fuel stored within the vessel. The heated air within the inner part of the vessel rises and is discharged from the housing through the outlet vent. The heated air is replaced by cooler air from the outer part of the housing which in turn is replaced by fresh air drawn from atmosphere through the inlet vent. In this way natural circulation ensures steady flow of cool air over the vessel and through the passages in the vessel.

The housing may include, at a position spaced between the top and the bottom, a shoulder on which the vessel is supported with part of the vessel protruding above the shoulder and the remainder of the vessel being positioned below the shoulder.

At least part of the divider may be formed from a material which acts as a radiation shield, e.g. lead or concrete. If desired, a transverse radiation shield may be provided in the inner part of the housing above the vessel, the transverse radiation shield having at least one flow passage, through which coolant can pass, extending therethrough.

By providing the radiation shielding outside the vessel by means of the housing, the vessel can be of much lighter thin-walled construction than the vessels of the prior art resulting in a substantial cost saving. A further advantage of the thin wall construction is that heat transfer from the fuel contained in the fuel receiving cavity through the walls of the vessel to the coolant is enhanced.

The invention will now be described, by way of example, with reference to the accompanying diagrammatic drawings.

In the drawings,

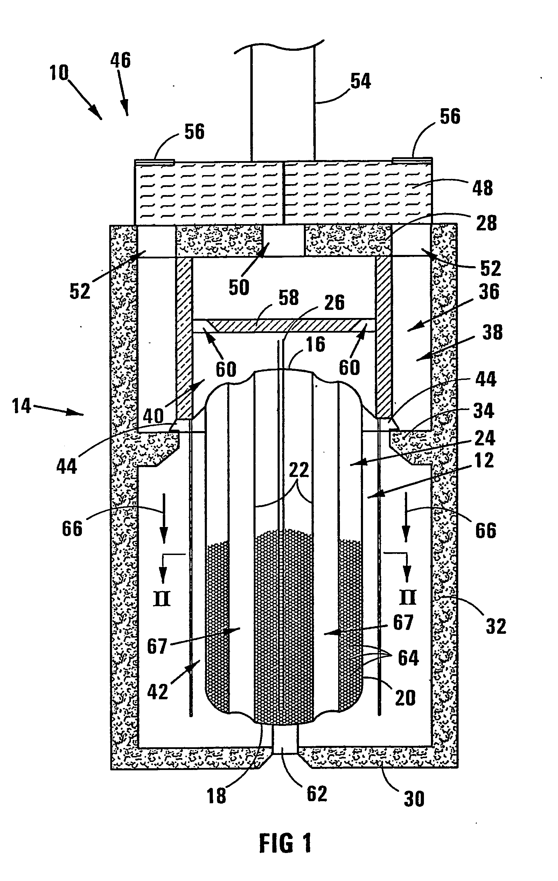

Figure 1 shows a vertical sectional elevation of a nuclear fuel storage unit in accordance with the invention; and
Figure 2 shows a transverse sectional view taken at II-II in Figure 1.

In the drawings, reference numeral 10 refers generally to a nuclear fuel storage unit in accordance with the invention. The unit 10 includes a vessel 12 contained within a housing 14.

The vessel 12 is elongate having a dished top 16, a dished bottom 18 and a circular cylindrical side wall 20 connected to and extending therebetween.

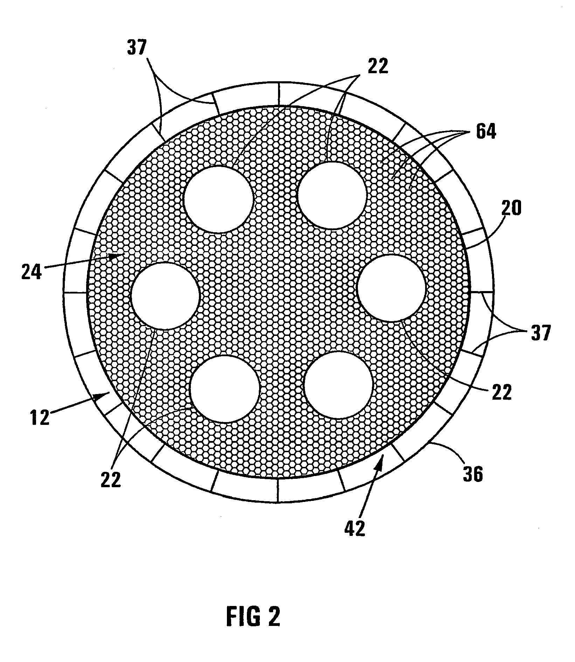

A plurality of tubular members 22 are connected to and open out of the top 16 and bottom 18. As can best be seen in Figure 2 of the drawings six tubular members 22 are equally circumferentially spaced. However, depending on the intended application more or fewer members 22 can be provided at alternative positions and different diameters.

A fuel receiving cavity 24 is defined between the outer surfaces of the tubular members 22 and the inner surface of the vessel 12.

The unit 10 further includes at least one fuel loading passage which, in the embodiment shown is in the form of a pipe 26, whereby fuel to be stored can be introduced into the fuel receiving cavity 24. It will be appreciated, however, that the fuel loading passage can take any suitable form.

The housing 14 includes a square top 28, a square bottom 30 and a side wall 32 extending therebetween. An annular shoulder 34 protrudes inwardly from the side wall 32 intermediate the top 28 and bottom 30 and forms a support for the vessel 12, as described in more detail herebelow.

A circular cylindrical divider, generally indicated by reference numeral 36 is connected to the top 28 and extends downwardly therefrom to a position spaced above the bottom 30 thereby dividing the housing 14 into a vertically extending outer part 38 and a concentric inner part 40. The vessel 12 is positioned in the inner part 40 of the housing 14 and a radial clearance is provided between the outer surface of the vessel 12 and the divider 36 thereby defining an annular flow path 42 between the vessel 12 and the divider 36.

A plurality of circumferentially spaced radially protruding support members 44 are connected to and protrude radially outwardly from the side wall 20 at a position adjacent to the top 16. The support members 44 are supported on the shoulder 34.

The nuclear fuel storage unit 10 includes a cooling system, generally indicated by reference numeral 46. The cooling system 46 has a primary mode of operation in which it functions as a closed loop active cooling system and a secondary mode of operation in which it functions as a passive cooling system.

More particularly, the cooling system 46 includes a cooling and conditioning unit 48 which is mounted on top of the housing 14. The cooling and conditioning unit 48 has a coolant inlet which is in flow communication with a hot outlet 50 which extends through the top 28 from the inner part 40 of the housing 14. The cooling and conditioning unit 48 further includes a plurality of outlets, each of which is connected to an inlet 52, two of which are shown, extending through the top 28 into the outer part 38 of the housing 14. The cooling and conditioning unit 48 makes use of a heat exchanger, typically an air cooled heat exchanger for cooling the coolant from the housing 14. Accordingly, the cooling and conditioning unit 48 typically includes an air inlet and an air outlet which are opened to atmosphere to permit cool air to be drawn into the cooling and conditioning unit 48 from atmosphere and heated air to be discharge therefrom, e.g. through an exhaust duct 54.

The cooling and conditioning unit 48 further includes a vent arrangement which, in the primary mode of operation of the cooling system, i.e. when the cooling and conditioning unit 48 is operational to cool and circulate the coolant, is closed and which in the secondary mode of operation of the cooling system is open as described in more detail herebelow. The vent arrangement includes vents 56.

In order to permit access to the interior of at least the upper part of the housing 14, i.e. above the shoulder 34, the divider 36 may be in the form of a radiation shield. Further, if required, a transverse radiation shield 58 may be provided in the inner part 40 of the housing 14 above the vessel 12 which prevents radiation streaming through the outlet 50. A plurality of circumferentially spaced flow passages 60 extends through the transverse radiation shield 58.

A tank unloading device 62 extends from the bottom of the vessel 12 through the bottom 30 of the housing 14.

In use, a plurality of nuclear fuel elements 64, typically spherical fuel elements such as that used in a pebble bed nuclear reactor, is introduced into the fuel receiving cavity 24 via the pipe 26. In the primary mode of operation of the cooling system 46, the vents 56 are closed and circulation of coolant, typically treated air, is by forced circulation, e.g. by means of one or more electrically driven blowers contained within the cooling and conditioning unit 48. Hence the coolant leaves the cooling and conditioning unit 48 and enters the outer part 38 of the housing 14 through the inlets 52. The coolant moves downwardly in the direction of arrows 66 between the divider 36 and the side wall 32 of the housing 14. When the coolant reaches the bottom of the outer part 38 it passes below the lower edge of the divider 36 into the inner part 40 of the housing 24. The coolant then flows upwardly through the flow paths 67 defined by the tubular members 22 and between the outer surface of the vessel 12 and the inner surface of the divider 36. The coolant is then heated as a result of decay heat emitted by the fuel contained within the vessel 12. The heated coolant flows through the outlet 50 into the cooling and conditioning unit 48 where it is cooled and returned to the outer part of the housing in a closed loop.

If, however, for any reason the active cooling is lost, e.g. if the cooling and conditioning unit 48 fails or if the blowers fail, then the cooling system automatically enters a secondary mode of operation in which it functions as a passive cooling system. In this mode of operation, the vents 56 are opened thereby connecting the inner and outer parts 40, 38 in flow communication with atmosphere through the outlet 50 and the inlet 52, respectively. As a result of the decay heat generated by the fuel contained within the vessel 12, the air in the inner part 40 is heated and rises exiting the inner part of the housing 14 through the outlet 50 where it is discharged to atmosphere. This air is replaced by cooler air which is drawn from the outer part 38 which in turn is replaced by fresh air from atmosphere drawn into the housing 14 through the inlets 52. In this way, as a result of the chimney effect of flow paths 42 and 67 a natural circulation is setup which permits the vessel 12 and the fuel contained therein to be cooled indefinitely.

By making use of the cooling and conditioning unit 48, the coolant air can be treated, e.g. by reducing its moisture content, in order to limit corrosion of the vessel 12. As a result, the vessel 12 can be made from thin-walled carbon steel, thereby significantly reducing the costs of the vessel 12. It will be appreciated, however, that when in its passive mode of operation, the air drawn from atmosphere is not treated and although, from a cooling point of view, the passive cooling can be sustained indefinitely it is desirable, in order to limit a corrosion on the vessel 12, that active cooling be restored as soon as possible.

It will be appreciated that a spent fuel storage system may contain several nuclear fuel storage units 10 in order to meet desired storage capacity. Each storage unit will then typically function independently of the other. It will be appreciated that the longer a nuclear reactor is operational, the more spent fuel will be generated and greater storage volume will be required. If the storage unit does not contain fuel elements, it is possible to reduce the amount of equipment of the units and to complete the installation before each unit is required to receive the fuel elements. In this way the initial capital cost can be reduced. Further, as the spent fuel decays inside the vessel 12, the total heat load drops. At some point, it will be possible to downgrade the cooling- capacity of the cooling and conditioning units 48, thereby reducing the total operational cost of the storage unit.

The Inventor believes that advantages associated with the invention include the fact that by virtue of the geometry and packing density of the fuel, large volumes of fuel can be contained in the vessel without having to use exotic neutron absorbing material to achieve sub-criticality. The storage unit thus serves the dual function of heat removal and achieving sub-criticality.

In view of the fact that adequate radiation shielding is provided outside the vessel, it is not necessary for the vessel to be constructed of a material which serves as a radiation shield. Accordingly, the design of the vessel must be such that it can withstand the relatively low structural loads to which is it subjected. In addition, as a result of the fact that the cooling and conditioning unit can reduce the moisture content of the coolant air, the risk of corrosion to the material of the vessel is substantially reduced. Consequently, the vessel can be constructed of a relatively thin carbon steel which substantially reduces the cost associated with the manufacture of the storage unit. Further, in both the active and passive mode of operation, the cooling air flows through the same flow paths which greatly simplifies the construction of the storage units and hence the costs associated therewith.

In addition, by virtue of the fact that the vessel contains a single relatively large fuel receiving cavity, the loading of the storage unit with fuel is greatly simplified. This is particularly true when the fuel being stored is in the form of spherical elements since they will automatically distribute themselves within the fuel receiving cavity.

The cooling system is inherently safe because of the fact that if active cooling is lost, it automatically switches to a passive cooling mode which can be sustained indefinitely. The storage unit configuration can be changed to suit the specific storage and heat load needs, thereby minimizing the installed and operational costs of the unit. Further, by making use of large containers not only is the number of containers defining a single fuel recovering cavity reduced but they also eliminate the need for complex handling and loading and unloading equipment.

## Claims

1. A nuclear fuel storage unit (10) which includes
a vessel (12);
at least one tubular member (22) which extends through the vessel (12) and opposite ends which open cut of the vessel (12) at spaced apart positions to define an internal coolant flow-path such that a fuel receiving cavity (24) is defined between an outer surface of the at least one tubular member and an inner surface of the vessel the configuration of the fuel receiving cavity being such that the packing density and geometry of fuel received in the fuel receiving cavity is such that the fuel remains sub-critical; and
at least one fuel loading passage leading into the fuel receiving cavity (24) whereby fuel to be stored can be introduced into the fuel receiving cavity;
**characterised in that**
the nuclear storage unit further includes a cooling system (46) which has a primary mode of operation in which it functions as a closed loop active cooling system and a secondary mode of operation in which it functions as an open loop passive cooling system, a heat transfer path between the fuel receiving cavity and the internal coolant flow path being the same in both the primary and secondary modes of operation.

2. A nuclear fuel storage unit as claimed in claim 1 in which the vessel (12) includes a top (16) and a bottom (18) connected together by a sidewall (20), the at least one tubular member (22) extending between and opening out of the top and bottom.

3. A nuclear fuel storage unit as claimed in claim 2, which includes a plurality of spaced apart tubular members (22) extending between and opening out of the top (16) and bottom (18) of the vessel.

4. A nuclear fuel storage unit as claimed in any one of the preceding claims, in which the cooling system, in its primary mode of operation, makes use of low humidity air as coolant.

5. A nuclear fuel storage unit as claimed in claim 2, which includes a hollow housing (14) within which the vessel (12) is contained, the housing having a top (28), a bottom (30) and a side wall (32) extending therebetween, a divider (36) being provided in the housing (14) to divide the housing into an outer part (38) and an inner part (40) within which the vessel (12) is located, the outer and inner parts being connected in flow communication.

6. A nuclear fuel storage unit as claimed in claim 5, in which the cooling system (46) includes a cooling and moisture content reducing unit (48) having an inlet which is connected in flow communication with the inner part of the housing (40) for receiving hot coolant therefrom and an outlet which is in flow communication with the outer part (38) of the housing, to feed coolant thereto.

7. A nuclear fuel storage unit as claimed in claim 6, in which the divider (36) extends downwardly from the top (28) of the housing to a position clear of the bottom of the housing so that the lower ends of the outer and inner parts of the housing are connected in flow communication around the lower edge of the divider.

8. A nuclear fuel storage unit as claimed in claim 7, in which the divider (36) is spaced outwardly from an outer surface of the vessel (12) and inwardly from an inner surface of the side wall (32) of the housing such that a coolant flow path is defined between the housing (14) and the divider (36) and between the divider (36) and the outer surface of the vessel (12).

9. A nuclear fuel storage unit as claimed in any one of claims 6 to 8 inclusive, in which the inlet of the cooling and conditioning unit (48) is connected to a housing outlet (50) which leads from the inner part of the housing through the top (28) of the housing and the outlet of the cooling and conditioning unit is connected to a housing inlet (52) which extends through the top of the housing into the outer part of the housing.

10. A nuclear fuel storage unit as claimed in any one of claims 6 to 9, inclusive, in which the cooling system includes a vent arrangement (58) which, in the primary mode of operation, i.e. when the cooling and conditioning unit is fully functional, is closed and, in the secondary or passive mode of operation of the cooling system, is open, thereby connecting the interior of the housing in flow communication with atmosphere.

11. A nuclear fuel storage unit as claimed in claim 10, in which the vent arrangement includes at least one inlet vent leading into the outer part (38) of the housing (14) and at least one outlet vent leading from the top of the inner part (40) of the housing such that in the second or passive mode of operation air heated by decay heat can be discharged from the storage unit through the at least one outlet vent and replaced by natural circulation by cool air which is drawn into the outer part (38) of the housing, through the at least one inlet vent from where it passes into the inner part (40) of the housing, where it passes over and through the vessel (12) to pick up decay heat before being discharged through the at least one outlet vent.

12. A nuclear fuel storage unit as claimed in any one of claims 6 to 11, inclusive, in which the cooling and moisture content reducing unit (48) includes at least one air/coolant heat exchanger for cooling the coolant from the housing.

13. A nuclear fuel storage unit as claimed in any one of claims 5 to 12, inclusive, in which the housing (14) includes, at a position spaced between the top of and bottom, a shoulder (34) on which the vessel (12) is supported with part of the vessel protruding above the shoulder and the remainder of the vessel being positioned below the shoulder.

14. A nuclear fuel storage unit as claimed in any one of claims 5 to 13, inclusive, in which at least part of the divider (36) is formed from a material which acts as a radiation shield.

15. A nuclear fuel storage unit as claimed in claim 9, which additionally includes a radiation shield (58) provided in the inner part (40) of the housing (14) above the vessel (12), the radiation shield having at least one flow passage (16), through which coolant can pass, extending therethrough and preventing radiation streaming through the outlet (50).

## Patentansprüche

1. Kernbrennstofflagereinheit (10), umfassend:
einen Behälter (12);
mindestens ein rohrförmiges Element (22), welches durch den Behälter (12) verläuft, und gegenüberliegenden Enden, die sich aus dem Behälter (12) heraus an beabstandeten Positionen öffnen, um so einen internen Kühlmittelströmungsweg derart zu bilden, dass ein Brennstoff aufnehmender Hohlraum (24) zwischen einer Außenfläche des mindestens einen rohrförmigen Elements und einer Innenfläche des Behälters ausgebildet wird, wobei der Brennstoff aufnehmende Hohlraum derart ausgestaltet ist, dass die Packungsdichte und die Geometrie des in dem Brennstoff aufnehmenden Hohlraums aufgenommenen Brennstoffs derart ist, dass der Brennstoff unterkritisch bleibt; und
mindestens einen in den den Brennstoff aufnehmenden Hohlraum (24) führenden Brennstoffbeschickungskanal, wobei zu lagernder Brennstoff in den Brennstoff aufnehmenden Hohlraum eingeleitet werden kann;
**dadurch gekennzeichnet, dass**
die nukleare Lagereinheit ferner ein Kühlsystem (46) umfasst, welches über eine primäre Betriebsart verfügt, in der es als ein aktives, geschlossenes Regelkühlungssystem arbeitet, sowie über eine sekundäre Betriebsart, in der es als ein passives offenes Regelkühlungssystem arbeitet,
einen Wärmeübertragungsweg zwischen dem den Brennstoff aufnehmenden Hohlraum und dem internen Kühlmittelströmungsweg, welcher sowohl in der primären als auch der sekundären Betriebsart derselbe ist.

2. Kernbrennstofflagereinheit nach Anspruch 1, wobei der Behälter (12) ein Oberteil (16) und ein Unterteil (18) umfasst, die über eine Seitenwand (20) miteinander verbunden sind, wobei sich das mindestens eine rohrförmige Element (22) zwischen dem Oberteil (16) und dem Unterteil (18) des Behälters, sich aus diesen heraus öffnend erstreckt.

3. Kernbrennstofflagereinheit nach Anspruch 2, umfassend eine Vielzahl von voneinander beabstandeten rohrförmigen Elementen (22), die sich zwischen dem Oberteil (16) und dem Unterteil (18) des Behälters, sich aus diesen heraus öffnend erstrecken.

4. Kernbrennstofflagereinheit nach einem der vorstehenden Ansprüche, wobei das Kühlsystem in seiner primären Betriebsart feuchtigkeitsarme Luft als Kühlmittel verwendet.

5. Kernbrennstofflagereinheit nach Anspruch 2, umfassend ein hohles Gehäuse (14), in dem der Behälter (12) enthalten ist, wobei das Gehäuse ein Oberteil (28), ein Unterteil (30) und eine sich zwischen diesen erstreckende Seitenwand (32) aufweist, wobei in dem Gehäuse (14) ein Teiler (36) vorgesehen ist, um das Gehäuse in einen Außenteil (38) und einen Innenteil (40), in dem sich der Behälter (12) befindet, zu teilen, wobei der Außenteil und der Innenteil in Fließverbindung stehen.

6. Kernbrennstofflagereinheit nach Anspruch 5, wobei das Kühlsystem (46) eine Kühl- und Feuchtigkeitsgehalt reduzierende Einheit (48) umfasst, die einen Einlass aufweist, der mit dem Innenteil des Gehäuses (40) in Fließverbindung steht, um aus diesem warmes Kühlmittel aufzunehmen, sowie einen Auslass, der mit dem Außenteil (38) des Gehäuses in Fließverbindung steht, um diesem Kühlmittel zuzuführen.

7. Kernbrennstofflagereinheit nach Anspruch 6, wobei sich der Teiler (36) abwärts vom Oberteil (28) des Gehäuses bis zu einer Position erstreckt, die vom Unterteil des Gehäuses beabstandet ist, so dass die unteren Enden des Außen- und Innenteils des Gehäuses um den unteren Rand des Teilers herum in Fließverbindung stehen.

8. Kernbrennstofflagereinheit nach Anspruch 7, wobei der Teiler (36) von einer Außenfläche des Behälters (12) nach außen und von einer Innenfläche der Seitenwand (32) des Gehäuses nach innen derart beabstandet ist, dass zwischen dem Gehäuse (14) und dem Teiler (36) sowie zwischen dem Teiler (36) und der Außenfläche des Behälters (12) ein Kühlmittelströmungsweg ausgebildet ist.

9. Kernbrennstofflagereinheit nach einem der Ansprüche 6 bis 8, wobei der Einlass der Kühl- und Aufbereitungseinheit (48) mit einem Gehäuseauslass (50) verbunden ist, der von dem Innenteil des Gehäuses durch das Oberteil (28) des Gehäuses führt, und der Auslass der Kühl- und Aufbereitungseinheit mit einem Gehäuseeinlass (52) verbunden ist, der sich durch das Oberteil des Gehäuses in den Außenteil des Gehäuses erstreckt.

10. Kernbrennstofflagereinheit nach einem der Ansprüche 6 bis 9, wobei das Kühlsystem eine Belüftungsanordnung (58) umfasst, welche in der primären Betriebsart, d.h. wenn die Kühl- und Aufbereitungseinheit voll funktionsfähig ist, geschlossen ist, und in der sekundären bzw. passiven Betriebsart des Kühlsystems geöffnet ist, so dass das Gehäuseinnere mit der Atmosphäre in Fließverbindung steht.

11. Kernbrennstofflagereinheit nach Anspruch 10, wobei die Belüftungsanordnung mindestens eine Einlassöffnung umfasst, welche in den Außenteil (38) des Gehäuses (14) führt, und mindestens eine Auslassöffnung, welche vom Oberteil des Innenteils (40) des Gehäuses derart geführt ist, dass in der sekundären bzw. passiven Betriebsart durch Nachzerfallswärme erwärmte Luft aus der Lagereinheit durch die mindestens eine Auslassöffnung abgeführt und mittels natürlicher Zirkulation durch kalte Luft ersetzt werden kann, die in den Außenteil (38) des Gehäuses durch die mindestens eine Einlassöffnung angesaugt wird, von wo aus sie in den Innenteil (40) des Gehäuses gelangt, wo sie zur Aufnahme von Nachzerfallswärme über und durch den Behälter (12) geführt wird, bevor sie durch die mindestens eine Auslassöffnung abgeführt wird.

12. Kernbrennstofflagereinheit nach einem der Ansprüche 6 bis 11, wobei die Kühl- und Feuchtigkeitsgehalt reduzierende Einheit (48) mindestens einen Luft-/Kühlmittelwärmetauscher zum Abkühlen des Kühlmittels aus dem Gehäuse umfasst.

13. Kernbrennstofflagereinheit nach einem der Ansprüche 5 bis 12, wobei das Gehäuse (14) an einer vom Oberteil und Unterteil beabstandeten Position einen Ansatz (34) aufweist, auf dem sich der Behälter (12) mit einem Abschnitt des Behälters, der oberhalb des Ansatzes vorspringt, abstützt, und sich der Rest des Behälters unterhalb des Ansatzes befindet.

14. Kernbrennstofflagereinheit nach einem der Ansprüche 5 bis 13, wobei mindestens ein Teil des Teilers (36) aus einem Material besteht, das als Strahlungsabschirmung wirkt.

15. Kernbrennstofflagereinheit nach Anspruch 9, zusätzlich umfassend eine Strahlungsabschirmung (58), die im Innenteil (40) des Gehäuses (14) oberhalb des Behälters (12) vorgesehen ist, wobei die Strahlungsabschirmung mindestens einen sich durch diese erstreckenden Strömungskanal (16) aufweist, durch den Kühlmittel strömen kann, und der verhindert, dass Strahlung durch den Auslass (50) gelangt.

## Revendications

1. Unité de stockage de combustible nucléaire (10), qui comprend :
une cuve (12) ;
au moins un élément tubulaire (22) qui s'étend à travers la cuve (12) et dont des extrémités opposées s'ouvrent hors de la cuve (12) en des positions mutuellement espacées de façon à définir un trajet d'écoulement d'agent de refroidissement interne, de telle sorte qu'une cavité de réception de combustible (24) soit définie entre une surface extérieure de l'élément tubulaire au nombre d'au moins un et une surface intérieure de la cuve, la configuration de la cavité de réception de combustible étant telle que la compacité et la géométrie du combustible reçu dans la cavité de réception de combustible soient telles que le combustible reste sous-critique ; et
au moins un passage de chargement de combustible menant dans la cavité de réception de combustible (24), grâce à quoi un combustible devant être stocké peut être introduit dans la cavité de réception de combustible ;
**caractérisée en ce que**
l'unité de stockage nucléaire comprend de plus un système de refroidissement (46) qui comporte un mode de fonctionnement primaire dans lequel il fonctionne en système de refroidissement actif en boucle fermée et un mode de fonctionnement secondaire dans lequel il fonctionne en système de refroidissement passif en boucle ouverte,
un trajet de transfert de chaleur entre la cavité de réception de combustible et le trajet d'écoulement d'agent de refroidissement interne étant le même aussi bien dans les modes de fonctionnement primaire que secondaire.

2. Unité de stockage de combustible nucléaire selon la revendication 1, dans laquelle la cuve (12) comprend un dessus (16) et un fond (18) reliés l'un à l'autre par une paroi latérale (20), l'élément tubulaire au nombre d'au moins un (22) s'étendant entre le dessus et le fond et s'ouvrant hors de ceux-ci.

3. Unité de stockage de combustible nucléaire selon la revendication 2, qui comprend une pluralité d'éléments tubulaires mutuellement espacés (22) s'étendant entre le dessus (16) et le fond (18) de la cuve et s'ouvrant hors de ceux-ci.

4. Unité de stockage de combustible nucléaire selon l'une quelconque des revendications précédentes, dans laquelle le système de refroidissement, dans son mode de fonctionnement primaire, utilise de l'air à faible humidité comme agent de refroidissement.

5. Unité de stockage de combustible nucléaire selon la revendication 2, qui comprend une enceinte creuse (14) à l'intérieur de laquelle la cuve (12) est contenue, l'enceinte comportant un dessus (28), un fond (30) et une paroi latérale (32) s'étendant entre ceux-ci, un diviseur (36) étant disposé dans l'enceinte (14) afin de diviser l'enceinte en une partie extérieure (38) et une partie intérieure (40) à l'intérieur de laquelle est disposée la cuve (12), les parties intérieure et extérieure étant reliées en communication d'écoulement.

6. Unité de stockage de combustible nucléaire selon la revendication 5, dans laquelle le système de refroidissement (46) comprend une unité de refroidissement et de réduction de teneur en humidité (48) comportant un orifice d'entrée qui est relié en communication d'écoulement à la partie intérieure de l'enceinte (40) de façon à recevoir un agent de refroidissement chaud de celle-ci et un orifice de sortie qui est en communication d'écoulement avec la partie extérieure (38) de l'enceinte, de façon à délivrer un agent de refroidissement à celle-ci.

7. Unité de stockage de combustible nucléaire selon la revendication 6, dans laquelle le diviseur (36) s'étend vers le bas à partir du dessus (28) de l'enceinte vers une position dégagée vis-à-vis du fond de l'enceinte, de telle sorte que les extrémités inférieures des parties extérieure et intérieure de l'enceinte soient reliées en communication d'écoulement autour du bord inférieur du diviseur.

8. Unité de stockage de combustible nucléaire selon la revendication 7, dans laquelle le diviseur (36) est espacé vers l'extérieur à partir d'une surface extérieure de la cuve (12) et vers l'intérieur à partir d'une surface intérieure de la paroi latérale (32) de l'enceinte, de telle sorte qu'un trajet d'écoulement d'agent de refroidissement soit défini entre l'enceinte (14) et le diviseur (36) et entre le diviseur (36) et la surface extérieure de la cuve (12).

9. Unité de stockage de combustible nucléaire selon l'une quelconque des revendications 6 à 8 incluses, dans laquelle l'orifice d'entrée de l'unité de refroidissement et de conditionnement (48) est relié à un orifice de sortie d'enceinte (50) qui mène à partir de la partie inférieure de l'enceinte à travers le dessus (28) de l'enceinte, et l'orifice de sortie de l'unité de refroidissement et de conditionnement est reliée à un orifice d'entrée d'enceinte (52) qui s'étend à travers le dessus de l'enceinte dans la partie extérieure de l'enceinte.

10. Unité de stockage de combustible nucléaire selon l'une quelconque des revendications 6 à 9 incluses, dans laquelle le système de refroidissement comprend un agencement d'évacuation (58) qui, dans le mode de fonctionnement primaire, à savoir lorsque l'unité de refroidissement et de conditionnement est totalement fonctionnelle, est fermé, et qui, dans le mode de fonctionnement secondaire, ou passif, du système de refroidissement, est ouvert, de façon à relier ainsi l'intérieur de l'enceinte en communication d'écoulement avec l'atmosphère.

11. Unité de stockage de combustible nucléaire selon la revendication 10, dans laquelle l'agencement d'évacuation comprend au moins une évacuation d'entrée menant dans la partie extérieure (38) de l'enceinte (14) et au moins une évacuation de sortie menant à partir du dessus de la partie intérieure (40) de l'enceinte, de telle sorte que, dans le mode de fonctionnement secondaire, ou passif, de l'air chauffé par la chaleur de désintégration radioactive puisse être déchargé de l'unité de stockage à travers l'évacuation de sortie au nombre d'au moins une et remplacé par circulation naturelle par de l'air froid qui est aspiré dans la partie extérieure (38) de l'enceinte, à travers l'évacuation d'entrée au nombre d'au moins une, à partir de laquelle il passe dans la partie intérieure (40) de l'enceinte, où il passe sur et à travers la cuve (12) afin d'emporter la chaleur de désintégration radioactive avant d'être déchargé à travers l'évacuation de sortie au nombre d'au moins une.

12. Unité de stockage de combustible nucléaire selon l'une quelconque des revendications 6 à 11 incluses, dans laquelle l'unité de refroidissement et de réduction de teneur en humidité (48) comprend au moins un échangeur de chaleur air/agent de refroidissement pour refroidir l'agent de refroidissement venant de l'enceinte.

13. Unité de stockage de combustible nucléaire selon l'une quelconque des revendications 5 à 12 incluses, dans laquelle l'enceinte (14) comprend, dans une position espacée entre le dessus et le fond, un épaulement (34) sur lequel la cuve (12) est supportée avec une partie de la cuve qui fait saillie au-dessus de l'épaulement et le reste de la cuve qui est positionné en dessous de l'épaulement.

14. Unité de stockage de combustible nucléaire selon l'une quelconque des revendications 5 à 13 incluses, dans laquelle au moins une partie du diviseur (36) est constituée par un matériau qui joue le rôle de blindage vis-à-vis des radiations.

15. Unité de stockage de combustible nucléaire selon la revendication 9, qui comprend de plus un blindage vis-à-vis des radiations (58) disposé dans la partie intérieure (40) de l'enceinte (14) au-dessus de la cuve (12), le blindage vis-à-vis des radiations comportant au moins un passage d'écoulement, à travers lequel peut passer un agent de refroidissement, s'étendant à travers celui-ci et empêchant des radiations de fuir à travers l'orifice de sortie (50).
